# EUROPÄISCHE PATENTSCHRIFT

(11) **EP 2 369 313 B1**
(45) Veröffentlichungstag und Bekanntmachung des Hinweises auf die Patenterteilung: **31.12.2014**
(21) Anmeldenummer: 10157388.9
(22) Anmeldetag: 23.03.2010
(51) Int. Cl.: G01G 23/01, G01D 5/347, G01D 18/00

(54) **Kalibrieranordnung für eine elektronische Waage**
Calibration system for an electronic scale
Agencement de calibrage pour une balance électronique

(43) Veröffentlichungstag der Anmeldung: 28.09.2011
(73) Patentinhaber: Mettler-Toledo AG, 8606 Greifensee (CH)
(72) Erfinder: Uster, Markus, 8606, Nänikon (CH)

(56) Entgegenhaltungen:
- EP-A1- 1 767 909
- DE-C1- 3 919 870
- US-A1- 2003 110 003
- US-A1- 2005 017 159
- US-A1- 2009 072 130

## Beschreibung

Die vorliegende Erfindung betrifft ein Verfahren zum Einstellen einer Kalibrieranordnung einer eine Kalibrieranordnung und eine Kraftmessvorrichtung aufweisenden elektronischen Waage während der Produktion, sowie ein Verfahren zum Kalibrieren dieser Waage und eine Vorrichtung zur Durchführung dieser Verfahren.

Im Allgemeinen wird die Empfindlichkeit einer Waage von Umgebungseinflüssen wie Temperatur- und Luftdruckschwankungen so wie von der Alterung von Bauteilen verändert. Aus diesem Grund sollen Waagen regelmässig kalibriert werden.

Elektronische Waagen werden häufig mittels eines internen Kalibriergewichts kalibriert. Für eine Kalibrierung wird ein Kalibriergewicht mit einer definierten Masse mit der in einer Kraftmesszelle einer Waage angeordneten Kraftübertragungsvorrichtung oder mit dem Kraftaufnahmebereich der Kraftmesszelle in Kraftkontakt gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung oder dem Kraftaufnahmebereich wieder gelöst und das Kalibriergewicht in einer Ruheposition arretiert. Das Kalibriergewicht wird dabei durch einen Transfermechanismus aus einer Ruheposition in eine Kalibrierposition und zurück bewegt. In der Kalibrierposition steht das Kalibriergewicht in Kraftkontakt mit der Kraftmesszelle beziehungsweise mit dem Kraftaufnahmebereich; in der Ruheposition besteht kein Kraftkontakt. Der Bereich, in dem das Kalibriergewicht bewegt werden kann, ist in beiden Richtungen durch mechanische Elemente begrenzt. Diese Elemente können zum Beispiel die Lagerstellen der Gewindespindel sein, wenn der Transfermechanismus über eine Gewindespindel angetrieben wird, wie in den EP1873504 A1 und EP 1 767 909 A1 offenbart, oder Nachbarelemente einer Kurvenscheibe, wenn das Kalibriergewicht von einer am Antriebssystem gekoppelten Kurvenscheibe getragen wird, wie die EP1674841 A1 es beschreibt. Diese mechanischen Begrenzungen werden Endanschläge genannt. Die Positionen der Endanschläge sind jeder Waage eigen.

Es ist bekannt, dass man die Endanschläge mit mechanischen Schaltern einrichten kann. Diese Schalter werden durch den Transfermechanismus aktiviert, wenn dieser gegen den entsprechenden Endanschlag kommt, und schalten auf diese Art das Antriebssystem ab. Ein Nachteil von solchen Schaltern ist, dass sie mit der Zeit einem gewissen Verschleiss unterliegen. Dazu können aus diesen Umschaltbewegungen Spannungen und Abweichungen im Schalter selbst oder beispielweise in der Lagerstelle einer vorgängig erwähnten Gewindespindel entstehen.

Eine Verbesserung stellt hingegen dar, wenn mittels eines elektro-optischen Sensors die Position unmittelbar vor dem Endanschlag erfasst wird. An der Achse des Antriebssystems wird beispielweise eine kreisausschnittförmige Scheibe mit einer Lichtschranke montiert. Wenn die Lichtschranke den Ausschnitt dieser Scheibe detektiert, wird das Antriebssystem gestoppt. Diese Lösung weist den Nachteil auf, dass sie bei der Montage eine feine und zeitaufwändige Justierung erfordert.

Ein weiterer Nachteil von Schaltern ist, dass die Position des Kalibriergewichts im Allgemeinen unbekannt ist.

Bekannt ist aus CH 676 7750 A5 eine Kalibrieranordnung, bei der der Verfahrweg des Kalibriergewichts durch einen elektronischen Umdrehungszähler am Motor oder durch eine mechanische Abtastung des Drehwinkels eines Übersetzungszahnrades erfolgt. Der Nachteil davon ist, dass die Position des Kalibriergewichts, wegen der Ungenauigkeit des Umdrehungszählers nur grob geschätzt werden kann.

Der vorliegenden Erfindung liegt daher die Aufgabe zugrunde, die Ruheposition und die Kalibrierposition mit geringstem Aufwand einzustellen, und das Bewegen des Kalibriergewichts auf seinem ganzen Fahrweg zu kontrollieren.

Diese Aufgabe wird erfindungsgemäss bei der Einstellung der Ruhe- und der Kalibrierposition des Wegs eines Kalibriergewichts in einer Kalibrieranordnung für eine eine Kraftmessvorrichtung aufweisende elektronische Waage in der Produktion dadurch gelöst, dass das Kalibriergewicht bei der Montage durch den Antrieb eines Transfermechanismus einmal bis in einen ersten Endanschlag und einmal bis in den entgegengesetzten Endanschlag gefahren wird. Der Fahrweg zwischen beiden Endanschlägen wird mittels eines Zählsystems gemessen und als ein erster Parameter in einer Kalibrier-Kontrolleinheit gespeichert. Aus dieser Gesamtanzahl von Distanzschritten werden weitere Parameter errechnet und in der Kalibrier-Kontrolleinheit gespeichert.

Ein solcher weiterer Parameter kann beispielweise als zweiter Parameter der Anzahl von Distanzschritten zwischen dem ersten Endanschlag und der Ruheposition entsprechen, während ein dritter Parameter der Anzahl Distanzschritte zwischen Ruhe- und Kalibrierposition und damit, dem im Kalibrierfall zu fahrenden Weg entspricht.

Ein Vorteil dieser Erfindung ist, dass das Einstellen des Fahrwegs bei der Montage des Kalibriergewichts keine mechanische Justierung mehr benötigt und in kürzester Zeit durchführbar ist.

Die Anwendung der mittels der Anzahl von Distanzschritten zwischen beiden Endanschlägen errechneten Parameter und eines definierten Abstands vom Endanschlag weist den Vorteil auf, dass das Kalibriergewicht auf seinem Fahrweg die Endanschläge nicht erreicht. Somit entfallen mechanische Belastungen wie ein Endanschlag sie ausüben würde, was für die Lebensdauer der Waage bedeutsam ist.

Eine weitere Besonderheit besteht darin, dass beim Errechnen der beschriebenen Parameter, die Ruheposition und die Kalibrierposition festgelegt werden.

In einer bevorzugten Weiterbildung sollen die Ruheposition und die Kalibrierposition mindestens zwei Distanzschritte vom nächsten Endanschlag entfernt sein, und die Summe der beiden Abstände soll 5% der gesamten Anzahl von Distanzschritten zwischen beiden Endanschlägen nicht überschreiten. Auf diese Weise wird gewährleistet, dass das Kalibriergewicht in der Kalibrierposition sicher in Kraftkontakt mit der Kraftmesszelle ist, und sich in der Ruheposition genügend weit weg von der Kalibrierposition befindet, so dass eine Belastung der Kraftmesszelle mit dem Kalibriergewicht hier vollständig ausgeschlossen ist.

Die Anzahl und/oder der Grösse der Distanzschritte ist entsprechend der Grösse der Wägezelle bzw. der Kalibrieranordnung anzupassen. Der Vorteil davon ist, dass das Verfahren für jeden Typ von Waagen anwendbar ist, d.h. es ist unabhängig von der absoluten Distanz zwischen den beiden Endanschlägen.

In einer weiteren Ausführungsform findet beim Aufstarten der Waage ein Initialisierungsvorgang statt, um sicherzustellen, dass das Kalibriergewicht sich in der Ruheposition befindet, bevor die Waage in Betrieb genommen wird. Dabei wird das Kalibriergewicht zuerst in die Kalibrierposition gefahren und die Anzahl von gefahrenen Distanzschritten wird dabei gezählt. Wenn das Kalibriergewicht vor dem Endanschlag die Kalibrierposition erreicht, wird es hier gestoppt und der Zähler auf Null gesetzt, und in die Ruheposition mittels eines Parameters entsprechend dem Fahrweg zwischen Kalibrier- und Ruheposition gefahren. Im Falle, dass das Kalibriergewicht in den Endanschlag kommt, ohne dass die vorgesehene Anzahl von Distanzschritten zwischen Kalibrierposition und Ruheposition abgefahren wurde, wird der Motor angehalten, der Zähler auf null gesetzt und das Kalibriergewicht mittels eines Parameters entsprechend dem Fahrweg zwischen dem ersten Endanschlag und der Ruheposition in die Ruheposition gebracht. Im Falle, dass das Kalibriergewicht auf dem Weg zur Ruheposition dann wieder vor dem Erreichen derselben gestoppt würde, könnte man daraus schliessen, dass das Antriebssystem defekt ist.

Besonders vorteilhaft ist, dass die Position des Kalibriergewichts stets bekannt ist, nachdem dieser Initialisierungsvorgang durchgeführt worden ist. Somit kann das Bewegen des Kalibriergewichts im Falle einer vorausgegangenen Störung (wie z.B. einem Stromausfall) einwandfrei weiter durchgeführt werden, indem in solchen Fällen wieder initialisiert wird.

In einer bevorzugten Weiterbildung wird bei der Kalibrierung das Kalibriergewicht gemäss der, als Weg zwischen Ruheposition und Kalibrierposition abgespeicherten Anzahl von Distanzschritten, zwischen der Ruheposition und der Kalibrierposition bewegt, und dabei wird der Weg stets mittels des Zählssystems gemessen.

Dank der Verwendung der errechneten Parameter wird das Kalibrieren der Waage eine schnelle und sichere Art die Genauigkeit der Waage zu gewährleisten.

Mittels der Position des Kalibriergewichts, kann auch seine Geschwindigkeit gemäss dem übrigen Fahrweg gesteuert werden. Dies erlaubt z.B. ein schnelleres Bewegen des Kalibriergewichts, und/oder ein sanftes Anhalten des Antriebssystems.

In einer vorteilhaften Ausführungsform kann das Zählsystem aus einer Lichtschranke und einer Scheibe mit gleichmässig verteilten durchgehenden Löchern bestehen. Der Abstand der Löcher bestimmt die Auflösung des Zählsystems. Ausserdem ergibt sich ein berührungsfreies Zählen der Distanzschritte.

Anstatt mit einer Scheibe mit Löchern in ihrem Inneren, kann das Zählsystem mit einem gezähnten Rad ausgestattet sein.

In einer vorteilhaften Weiterbildung kann das Zählsystem eine Stange mit linear aneinandergereihten Löchern aufweisen. Dabei bewegt sich die Lichtschranke relativ zur Stange. Man kann eine ohnehin vorhandene Führungssäule mit gleichmässig verteilten Löchern ausstatten, wobei die Lichtschranke sich mit der Auflage des Kalibriergewichts bewegt. Alternativ könnte auch eine bereits vorhandene Gewindestange entsprechend optisch abgetastet werden.

Besonders vorteilhaft ist es, wenn das Zählsystem eine Übersetzung aufweist. Diese ermöglicht eine grössere Auflösung beim Zählen der Distanzschritte.

Eine bevorzugte Gestaltung kann runde oder längliche Löcher aufweisen. Nahe beieinander liegende und enge Löcher können die Genauigkeit des Zählsystems erhöhen.

Anstatt Löcher kann die Zählscheibe in einer weiteren Ausführungsform mit reflektierendem Material ausgekleidete Vertiefungen aufweisen. Somit erfolgt die optische Abtastung in Reflexion.

In einer vorteilhaften Weiterbildung kann das Zählsystem übersetzt werden, um eine noch höhere Genauigkeit des Fahrwegs des Kalibriergewichts zu gewährleisten.

Einzelheiten der erfindungsgemässen Verfahren und der entsprechenden Kalibrieranordnung ergeben sich anhand der Beschreibung der in den Zeichnungen dargestellten Ausführungsbeispiele. Es zeigen:
- Fig. 1: Eine schematische Darstellung einer elektronischen Waage mit einer Kalibrieranordnung.
- Fig. 2: Eine stark schematische Darstellung einer Kalibrieranordnung mit einer Zählscheibe und einer Lichtschranke.
- Fig. 3: Eine Ausführungsform einer Kalibrieranordnung.
- Fig. 4: Ein Flussdiagramm, das das bei der Montage durchgeführtes Verfahren beschreibt.
- Fig. 5: Ein Flussdiagramm, das das beim Aufstarten der Waage aufgeführte Verfahren beschreibt.
- Fig. 6: Ein Flussdiagramm, das das Verfahren des Kalibrierens der Waage beschreibt.

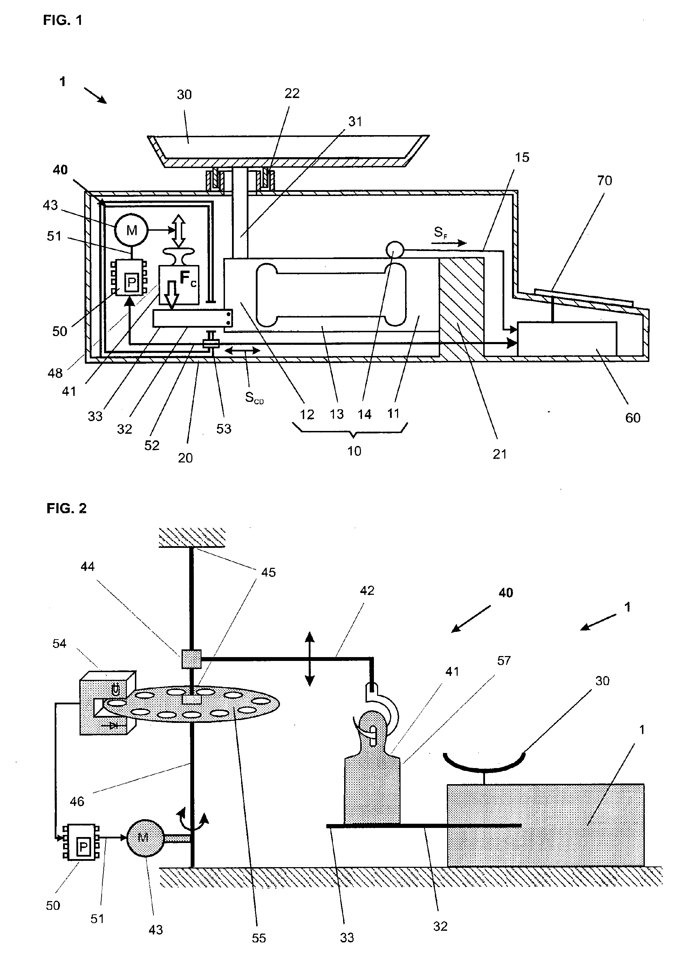

Die Figur 1 zeigt eine vereinfachte schematische Zeichnung einer Kraftmessvorrichtung 1 in Form einer Waage im Schnitt. Die Waage weist ein Gehäuse 20 auf, in dessen Innenraum eine Kraftmesszelle 10 angeordnet ist.

Die Kraftmesszelle 10 weist einen feststehenden Teil 11 und einen beweglichen Teil 12 auf, die durch einen Mittelteil 13 miteinander über Biegestellen verbunden sind. Ferner weist die Kraftmesszelle 10 einen Messsensor 14 auf, welcher die Bewegungen des beweglichen Teils 12 erfasst und in ein zu den Bewegungen korrespondierendes Messsignal S_{F} umwandelt. Der Einfachheit halber wird die Kraftmesszelle 10 nur mit einem Messsensor 14 dargestellt. Typischerweise werden jedoch vier Messsensoren 14 verwendet, jeweils einer an jeder Biegestelle zwischen dem Mittelteil 13 und dem feststehenden Teil 11 oder zwischen dem Mittelteil 13 und dem beweglichen Teil 12. Als Messsensoren 14 werden bevorzugt Dehnmessstreifen eingesetzt.

Die Kraftmesszelle 10 ist mit ihrem feststehenden Teil 11 über einen gehäusefesten Befestigungsteil 21 mit dem Gehäuse 20 starr verbunden. Ein ausserhalb des Gehäuses 20 angeordneter Kraftaufnahmebereich 30 in Form einer Waagschale ist über ein Gestänge 31 mit dem im Innenraum angeordneten beweglichen Teil 12 der Kraftmesszelle 10 verbunden. Das Gestänge 31 durchdringt das Gehäuse 20 berührungsfrei durch eine Gehäusedurchführung 22. Die Gehäusedurchführung 22 ist derart ausgebildet, dass ein Eindringen von Verunreinigungen möglichst vermieden oder zumindest stark reduziert wird.

Der Messsensor 14 ist über eine Messsignal-Verbindung 15 mit einer Verarbeitungseinheit 60 verbunden, um das vom Messsensor 14 erzeugte Messsignal S_{F} an die Verarbeitungseinheit 60 weiterzuleiten. Die Verarbeitungseinheit 60 ist über die weitere Verbindungsleitung mit der Anzeigeeinheit 70 verbunden, um die von der Verarbeitungseinheit 60 ermittelten Messwerte an die Anzeigeeinheit 70 zu übermitteln.

In der Nähe der Kraftmesszelle 10 und ebenfalls im Innenraum des Gehäuses 20 ist eine Kalibrieranordnung 40 angeordnet. Die Kalibrieranordnung 40 weist hier ein separates Gehäuse auf, in welchem ein Kalibriergewicht 41 beweglich angeordnet ist. Dabei kann das Kalibriergewicht 41 durch ein Antriebssystem 43 angehoben und abgesenkt werden. Dabei ist das Antriebssystem 43 als Elektromotor M ausgebildet, welcher durch entsprechende Steuersignale gesteuert wird, beispielsweise durch Schrittimpulse oder durch geeignete Steuerung der Stromversorgung.

Die Kalibrier-Kontrolleinheit 50 ist einerseits über eine Verbindungsleitung mit einem Anschlusselement 53 verbunden. Das Anschlusselement 53 wiederum ist über eine Verbindungsleitung mit der Verarbeitungseinheit 60 verbunden. Diese Verbindungsleitungen bilden eine Kommunikationsverbindung, welche in diesem Ausführungsbeispiel als Kommunikationsleitung 52 ausgebildet ist. Dadurch können Informationssignale S_{CD} zwischen Kalibrier-Kontrolleinheit 50 und Verarbeitungseinheit 60 bidirektional ausgetauscht werden.

Andererseits ist die Kalibrier-Kontrolleinheit 50 mit dem Elektromotor M über eine Steuerleitung 51 verbunden, sodass der Elektromotor M mittels Steuersignalen gesteuert werden kann.

Am beweglichen Teil 12 der Kraftmesszelle 10 ist ein erstes Ende einer Kraftübertragungsvorrichtung 32 starr befestigt. Das zweite, entfernte Ende der Kraftübertragungsvorrichtung 32 bildet eine Gewichtauflage 33, über welche eine vorgegebene Kraft F_{c} von der Kalibrieranordnung 40 der Kraftmesszelle 10 zugeführt werden kann. Diese Kraft F_{c} wird dann unmittelbar über die Kraftübertragungsvorrichtung 32 an die Kraftmesszelle 10 weitergeleitet. Die vorgegebene Kraft F_{c} wirkt somit in ähnlicher Weise auf die Kraftmesszelle 10 wie das Gewicht des Wägeguts F_{w}, welches auf die Waagschale gelegt wird. In diesem Ausführungsbeispiel wird die vorgegebene Kraft F_{c} dadurch erzeugt, dass das die Gewichtskraft des Kalibriergewichts 41 der Kalibrieranordnung 40 auf die Gewichtauflage 33 wirkt.

Dabei hat das Gehäuse der Kalibrieranordnung 40 entsprechende Öffnungen in der Gehäusewand, sodass das zweite, entfernte Ende der Kraftübertragungsvorrichtung 32 in den Innenraum des Gehäuses ragt um die Gewichtskraft des Kalibriergewichts 41 aufzunehmen. Es können aber auch Teile des Kalibriergewichts 41 oder dessen Verlängerungen durch Öffnungen in der Gehäusewand, beispielsweise durch Langlöcher, aus dem Gehäuse der Kalibrieranordnung 40 hinaus ragen um auf diese Weise das Kalibriergewicht 41 an die ausserhalb des Gehäuses befindliche Kraftübertragungsvorrichtung 32 zu koppeln.

Im Folgenden wird ein Kalibriervorgang kurz erläutert. Bei einem Kalibriervorgang sollte keine Kraft F_{w} auf den Kraftaufnahmebereich 30 wirken. Somit sollten am Anfang des Kalibriervorgangs auch keine Kräfte auf die Kraftmesszelle 10 wirken.

Zu Beginn eines Kalibriervorgangs wird dann das Kalibriergewicht 41 mittels des Elektromotors M auf die Gewichtauflage 33 in die Kalibrierposition 57 abgesenkt. Dadurch werden zwei Funktionen ausgeführt: einerseits wird die Kalibrieranordnung 40 an die Kraftmesszelle 10 gekoppelt und andererseits wird der Kraftmesszelle 10 eine vorgegebene Kraft F_{c}, nämlich die Gewichtskraft des Kalibriergewichts 41, zugeführt.

In der anschliessenden Phase wird das durch die Kraftmesszelle 10 erzeugte Messsignal S_{F} an die Verarbeitungseinheit 60 weitergeleitet und dort bezüglich der vorgegebenen Kraft F_{c} des Kalibriergewichts 41 ausgewertet. Mit den durch die Verarbeitung gewonnenen Resultaten werden dann die Berechnungsparameter in der Verarbeitungseinheit 60 optimiert. Diese Resultate können aber auch an die Anzeigeeinheit 70 oder an eine weitere Verarbeitungseinheit weitergeleitet werden.

Zum Abschluss des Kalibriervorgangs wird mittels des Elektromotors M das Kalibriergewicht 41 angehoben und damit von der Gewichtauflage 33 entfernt. Somit wird die Kalibrieranordnung 40 von der Kraftmesszelle 10 entkoppelt und in die Ruheposition 58 gebracht, so dass die Kraftmesszelle 10 während des normalen Messbetriebs nicht durch die Kalibrieranordnung 40 beeinflusst werden kann. Beim anschliessenden normalen Messbetrieb werden dann die Messungen des Wägeguts anhand der optimierten Berechnungsparameter ausgewertet.

Aus der Figur 2 ist eine stark schematisierte Waage mit einer Kalibrieranordnung 40 ersichtlich. Damit wird gezeigt, wie das Kalibriergewicht 41 bewegt wird, und wie sein Fahrweg gemessen wird.

Der Elektromotor treibt, wie hier dargestellt eine Gewindespindel 46 an. Diese kann sich in die eine oder in die andere Richtung drehen. An der gleichen Gewindespindel 46 ist eine Hubeinrichtung angekoppelt, bestehend aus einem Transfermechanismus 44 und einem Hubarm 42. Beim Betrieb des Elektromotors dreht sich die Gewindespindel 46, und der Hubarm 42 wird angehoben oder abgesenkt. Das Kalibriergewicht 41 hängt am Hubarm 42, und wird somit von der Ruheposition 58 in die Kalibrierposition 57 gebracht, oder umgekehrt.

Die Strecke der Gewindespindel 46, auf der der Hubarm 42 sich bewegen kann, ist an einem Ende durch die an der Gewindespindel 46 befestigte Zählscheibe 55, und am anderen Ende durch die Lagerstelle begrenzt. In dieser Ausführungsform bildet die Zählscheibe 55 einen ersten Endanschlag 45 und die Lagerstelle der Gewindespindel 46 einen zweiten Endanschlag 45. Die Endanschläge 45 können auch aus anderen Elementen der Kalibrieranordnung 40 bestehen.

Die Gewindespindel 46 und die Zählscheibe 55 drehen sich hier synchron mit dem Elektromotor. Die Zählscheibe 55 weist entlang eines auf die Achse zentrierten Umfangs im Inneren der Zählscheibe 55 liegende in regelmässigen Abständen durchgehende Löcher auf. Eine Lichtschranke 54 ist in Bezug auf der Zählscheibe 55 so angeordnet, dass das gesendete Licht eines der Löcher der Zählscheibe 55 durchdringen kann, und somit vom Sensor empfangen wird. Auf diese Art wird ein Signal erzeugt, und zur Kalibrier-Kontrolleinheit 50 gesendet. Danach wird deren interner Zähler inkrementiert, sprich um eins erhöht. Die Zählscheibe 55 und die Lichtschranke 54 bilden somit ein Zählsystem 56.

Die Kalibrier-Kontrolleinheit 50 enthält unter anderem einen Zähler und ein Speicherelement in welchem die Werte von Parametern A, B und C gespeichert werden können. Mit einem von diesen Parametern wird der Zähler verglichen, um zu bestimmen, ob der Elektromotor angehalten werden sollte oder nicht. Dieser wird von der Kalibrier-Kontrolleinheit 50 über eine Kontrollleitung gesteuert.

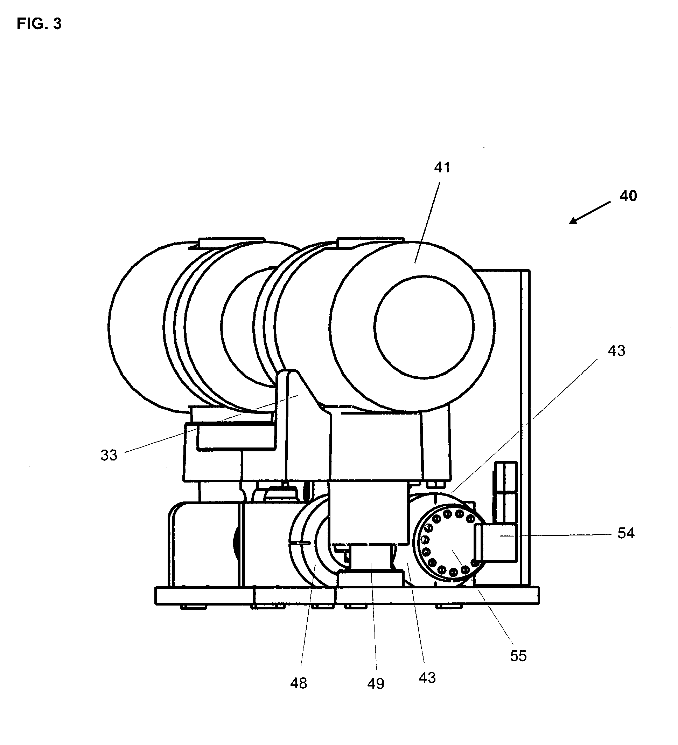

Die Figur 3 zeigt eine konkrete Ausführungsform der Kalibrieranordnung 40. Im Unterschied zur Figur 2 hängt das Kalibriergewicht 41 nicht an einem Hubarm 42 über der Kraftübertragungsvorrichtung, sondern es liegt auf einer Gewichtauflage 33 auf und wird über eine Gabel mit der Kraftübertragungsvorrichtung gekoppelt, wenn die Gewichtauflage 33 abgesenkt wird.

Am Sockel sind zwei senkrechte Führungssäulen 49, das Antriebssystem 43, und die bestückte Leiterplatte befestigt. Die Gewichtsauflage und das Kalibriergewicht 41 weisen zwei Bohrungen auf, und sind an diesen Stellen von den Führungssäulen 49 durchdrungen. So kann das Gewicht nur in senkrechter Richtung bewegt werden. Die Gewichtauflage 33 wird von unten von einer vom Elektromotor angetriebenen Kurvenscheibe 48 getragen, angehoben oder abgesenkt.

Die Zählscheibe 55 befindet sich auf der gleichen Achse wie der Elektromotor, und folgt deshalb der Bewegung der Kurvenscheibe 48.

Im Hintergrund ist die bestückte Leiterplatte ersichtlich. Die Lichtschranke 54, die Kalibrier-Kontrolleinheit 50 und der Elektromotor sind auf der bestückten Leiterplatte angeordnet oder stehen zumindest in elektrischer Verbindung mit dieser.

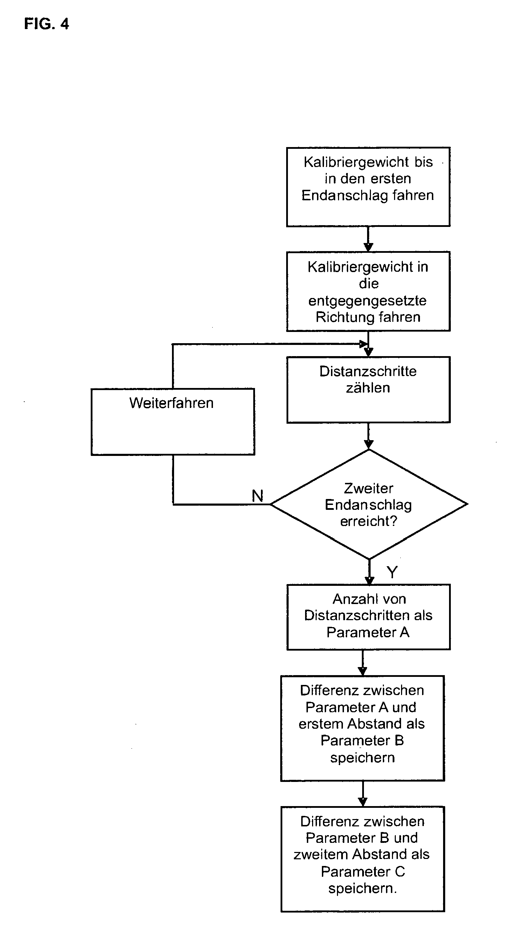

Die Figur 4 erklärt den Ablauf des bei der Montage durchgeführten Verfahrens, beim Einstellen der Ruheposition 58 und der Kalibrierposition 57 des Kalibriergewichts 41.

Wenn die Kalibrieranordnung 40 montiert worden ist, soll der Weg zwischen beiden Endanschlägen 45 gemessen werden und das Resultat, d.h. die Anzahl der zwischen den Endanschlägen 45 gemessenen Schritte, als Parameter A in der Kalibrier-Kontrolleinheit 50 gespeichert werden. Dazu wird der Elektromotor in Gang gesetzt. Wenn das Kalibriergewicht 41 durch einen ersten Endanschlag 45 gestoppt wird, wird der Motor angehalten, und das Zählsystem 56 wird durch die Kalibrier-Kontrolleinheit 50 auf null gesetzt. Danach wird der Elektromotor in die entgegengesetzte Richtung in Gang gesetzt. Ab dann zählt das Zählsystem 56 die Anzahl von gefahrenen Distanzschritten, bis das Kalibriergewicht 41 durch den zweiten Endanschlag 45 gestoppt wird und der Elektromotor wieder angehalten wird. Zum Abschluss des Verfahrens wird die gemessene Anzahl von Distanzschritten als Parameter A in der Kalibrier-Kontrolleinheit 50 gespeichert. Zusätzlich werden mittels des Parameters A, der Parameter B entsprechend dem Abstand zwischen dem ersten Endanschlag 45 und der Ruheposition 58, und der Parameter C entsprechend dem Abstand zwischen der Kalibrierposition 57 und der Ruheposition 58 ermittelt und gespeichert. Die Anzahl von Distanzschritten - entsprechend der Distanz zwischen der Ruheposition 58 und dem zweiten Endanschlag 45 -, die vom Parameter A subtrahiert werden, um zum Parameter B zu gelangen, kann sich ergeben aus:
- 2 bis 5 Distanzschritte
- 2 bis 3% der Distanzschritte, die Parameter A entsprechen

Da die Ruheposition 58 und die Kalibrierposition 57 sich in der Nähe der Endanschläge 45 befinden sollten, um dem Kalibriergewicht 41 eine klare Position zu sichern, ist es besonders vorteilhaft, wenn die gesamte Anzahl von Distanzschritten (entsprechend der Distanz zwischen der Ruheposition 58 und Kalibrierposition 57) die vom Parameter A subtrahiert werden, um zu Parameter C zu gelangen nicht den Anteil von 5% von Parameter A überschreitet.

Um sicher zu stellen, dass der Transfermechanismus 44 mit den Endanschlägen 45 nicht in Kontakt kommt, sollten die Ruhe- und die Kalibrierposition 57 mindestens 2 Distanzschritte vom nächsten Endanschlag 45 entfernt sein.

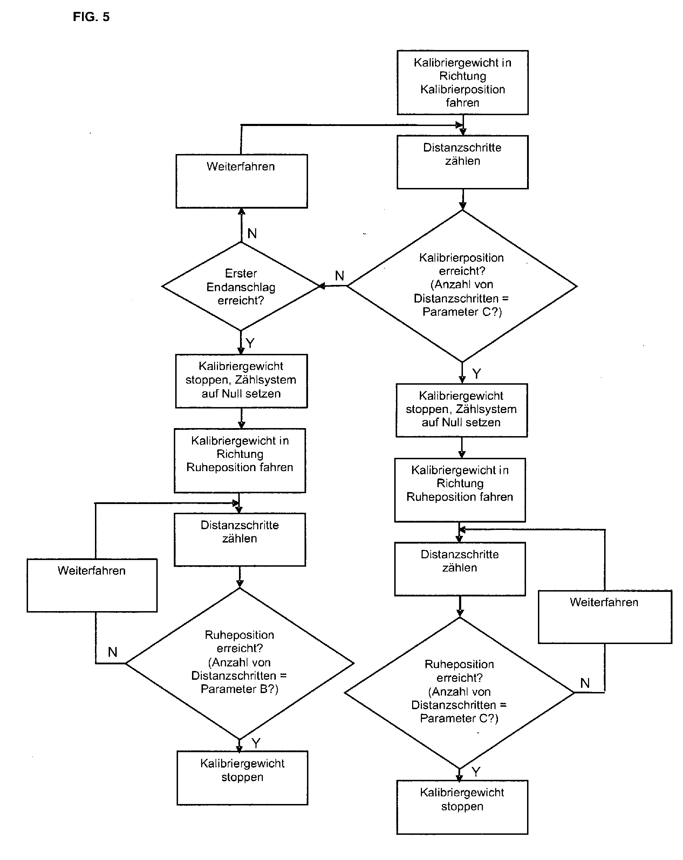

Die Figur 5 beschreibt einen Initialisierungsvorgang, der beim Aufstarten der Waage ausgeführt wird, um sicherzustellen, dass das Kalibriergewicht 41 sich für den Betrieb der Waage an der richtigen Stelle befindet, und zwar in der Ruheposition 58. Dazu wird zuerst der Elektromotor in Gang gesetzt, so dass das Kalibriergewicht 41 in die Kalibrierposition 57gefahren wird. Die Anzahl von gefahrenen Distanzschritten wird gezählt und mit einem abgespeicherten Parameter C entsprechend dem Abstand zwischen der Ruheposition 58 und der Kalibrierposition 57 verglichen. Wenn die Kalibrierposition 57 erreicht ist, wird der Elektromotor angehalten, und das Zählsystem 56 wird auf null gesetzt.

Danach wird der Elektromotor in die entgegengesetzte Richtung in Gang gesetzt, so dass das Kalibriergewicht 41 in die Ruheposition 58 bewegt wird. Dabei wird die Anzahl von Distanzschritten gezählt, und mit einem abgespeicherten Parameter C entsprechend dem Weg von der Ruheposition 58 zur Kalibrierposition 57 verglichen. Wenn die Anzahl von gefahren Distanzschritten diesem gespeicherten Parameter entspricht, wird der Motor wieder angehalten. Das Kalibriergewicht 41 befindet sich in der Ruheposition 58.

Wäre das Kalibriergewicht 41 auf seinem Weg zur Kalibrierposition 57 durch den Endanschlag 45 gestoppt worden, könnte es bedeuten, dass das Kalibriergewicht 41 beim Aufstarten der Waage sich schon zwischen Ruheposition 58 und Kalibrierposition 57 befand. Daher sollte der Motor am Endanschlag 45 angehalten werden, das Zählsystem 56 auf null gesetzt werden und das Kalibriergewicht 41 in die Ruheposition 58 gefahren werden. Dazu wird der Elektromotor in die entgegengesetze Richtung in Gang gesetzt, die Anzahl von gefahrenen Distanzschritten werden dabei gezählt und mit einem abgespeicherten Parameter B entsprechend dem Abstand zwischen dem ersten Endanschlag 45 und der Ruheposition 58 verglichen. Wenn die Anzahl von gefahren Distanzschritten diesem gespeicherten Parameter entspricht, wird der Motor wieder angehalten. Das Kalibriergewicht 41 befindet sich in der Ruheposition 58.

Im Falle, dass das Kalibriergewicht 41 auf dem Weg zur Ruheposition dann wieder vor dem Erreichen derselben gestoppt würde, könnte man daraus schliessen, dass das Antriebssystem 43 defekt ist.

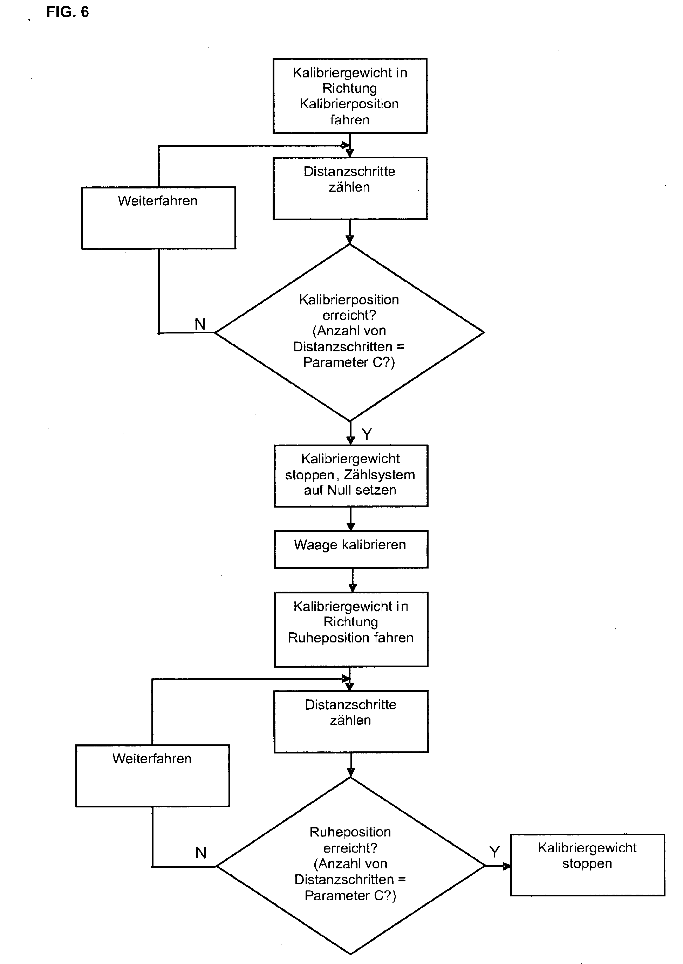

Die Figur 6 zeigt auf, wie das Kalibriergewicht 41 bei der Kalibrierung der Waage bewegt wird und sein Weg gesteuert wird.

Zu Beginn der Kalibrierung wird der Elektromotor in Gang gesetzt, so dass das Kalibriergewicht 41 in die Kalibrierposition 57 gefahren wird. Dabei wird die Anzahl von gefahrenen Distanzschritten gezählt und mit einem abgespeicherten Parameter C entsprechend dem Weg von der Ruheposition 58 zur Kalibrierposition 57 verglichen. Wenn die Kalibrierposition 57 erreicht ist, wird der Elektromotor angehalten, und das Zählsystem 56 wird auf null gesetzt. In der Kalibrierposition 57 ist das Kalibriergewicht 41 mit der Kraftmesszelle 10 gekoppelt. Das heisst, vermittels des Kalibriergewichts 41 wird der Kraftmesszelle 10 eine Kraft zugeführt. Diese erzeugt ein Messsignal, das zur Verarbeitungseinheit weitergeleitet wird, und dort gemäss der vorgegebenen Kraft F_{C} des Kalibriergewichts 41 ausgewertet wird.

Danach wird der Elektromotor in Gang gesetzt, so dass das Kalibriergewicht 41 in die Ruheposition 58 gefahren wird. Die Anzahl von Distanzschritten wird gezählt und mit einem vorgegebenen Parameter C entsprechend der Anzahl von Distanzschritten zwischen Ruhe- und Kalibrierposition 57 verglichen. Wenn der gefahrene Weg diesem Parameter gleicht, wird der Elektromotor angehalten. Das Kalibriergewicht 41 befindet sich in der Ruheposition 58, die Waage ist kalibriert und einsatzbereit.

Der Weg kann nach jeder Bewegung des Kalibriergewichts 41 registriert werden. Vorzugsweise wird noch ein Zeitwert abgespeichert, so dass ein Historienfile in der Speichereinheit zur Verfügung steht. Damit steht eine Möglichkeit zur Überprüfung der Kalibriervorgänge und/oder Initialisierungsvorgänge zur Verfügung.

Die vergangene Zeit zwischen zwei gefahrenen Distanzschritten kann gemessen und registriert werden. Somit kann auch die Geschwindigkeit des Kalibriergewichts 41 errechnet und dementsprechend gesteuert werden. Infolgedessen kann das Kalibriergewicht nach vorgegebenen Geschwindigkeitsprofilen bewegt werden, z.B. kann in der Nähe der Kalibrierposition mit einer kleinen Geschwindigkeit ein sanftes Ankoppeln an die Kalibrierposition erzielt werden.

Vor jeder Bewegung des Kalibriergewichts 41 soll der Zähler auf null gesetzt werden. So ist der Zählerzustand stets proportional zum gefahren Weg des Hubarms 42 oder der Kurvenscheibe 48.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Kraftmessvorrichtung
- 10: Kraftmesszelle
- 11: feststehender Teil
- 12: beweglicher Teil
- 13: Mittelteil
- 14: Messsensor
- 15: Messsignal-Verbindung
- 20: Gehäuse
- 21: Befestigungsteil
- 22: Gehäusedurchführung
- 30: Kraftaufnahmebereich
- 31: Gestänge
- 32: Kraftübertragungsvorrichtung
- 33: Gewichtauflage
- 40: Kalibrieranordnung
- 41: Kalibriergewicht
- 42: Hubarm
- 43: Antriebssystem
- 44: Transfermechanismus
- 45: Endanschläge
- 46: Gewindespindel
- 48: Kurvenscheibe
- 49: Führungssäule
- 50: Kalibrier-Kontrolleinheit
- 51: Steuerleitung
- 52: Kommunikationsverbindung/Kommunikationsleitung
- 53: Anschlusselement
- 54: Lichtschranke
- 55: Zählscheibe
- 56: Zählsystem
- 57: Kalibrierposition
- 58: Ruheposition
- 60: Verarbeitungseinheit
- 70: Anzeigeeinheit

- D: Abstand vom zweiten Endanschlag
- P: Parameter A, B, C und weitere Parameter
- F_{w}: einwirkende Kraft
- F_{C}: vorgegebene Kraft
- M: Elektromotor
- S_{CD}: Kontrollsignal für Kalibrieranordnung
- S_{F}: Messsignal

## Patentansprüche

1. Verfahren zum Einstellen einer Kalibrieranordnung (40) einer eine Kalibrieranordnung (40) und eine Kraftmessvorrichtung (1) aufweisenden elektronischen Waage während der Produktion, welche Kalibrieranordnung (40) einen mit einem Antriebssystem (43) versehenen Transfermechanismus (44) umfasst, wobei die Kalibrieranordnung (40) mindestens ein Kalibriergewicht (41) mit der Kraftmessvorrichtung (1) koppelt, indem der Transfermechanismus (44) das Kalibriergewicht (41) zwischen einer Ruheposition (58) und einer Kalibrierposition (57) geführt bewegt, umfassend die folgenden Schritte:
• Bewegen des Kalibriergewichts (41) bei der Montage einmal bis in einem ersten Endanschlag (45);
• Anschliessendes Bewegen des Kalibriergewichts (41) einmal bis in den zweiten Endanschlag (45);
• Messen des Wegs zwischen beiden Endanschlägen (45) mittels eines Zählsystems (56), wobei Distanzschritte des Weges inkrementell erfasst werden, und zumindest temporäres Abspeichern des Resultates als Anzahl an Distanzschritten zwischen beiden Endanschlägen (45);
• Subtrahieren einer ersten Anzahl von Distanzschritten entsprechend einem definierten Abstand vom ersten Endanschlag (45) von der gemessenen Anzahl an Distanzschritten, und Abspeichern der Differenz als Weg zwischen Ruheposition (58) und erstem Endanschlag (45);
• Subtrahieren einer zweiten Anzahl von Distanzschritten entsprechend einem definierten Abstand vom zweiten Endanschlag (45) von der errechneten Anzahl an Distanzschritten entsprechend dem Weg zwischen Ruheposition (58) und erstem Endanschlag (45), und Abspeichern der Differenz als Weg zwischen Ruheposition (58) und Kalibrierposition (57);

2. Verfahren nach Anspruch 1 **dadurch gekennzeichnet, dass** durch das Subtrahieren der ersten Anzahl von Distanzschritten entsprechend dem definierten Abstand vom ersten Endanschlag (45) von der gemessenen Anzahl an Distanzschritten, die Ruheposition (58) festgelegt wird, und durch das Subtrahieren der zweiten Anzahl von Distanzschritten entsprechend einem definierten Abstand vom zweiten Endanschlag (45) von der errechneten Anzahl an Distanzschritten die Kalibrierposition (57) festgelegt wird.

3. Verfahren nach Anspruch 1 **dadurch gekennzeichnet, dass** der Abstand vom ersten Endanschlag (45) und der Abstand vom zweiten Endanschlag (45) jeweils mindestens zwei Distanzschritte umfassen, und ihre Summe maximal 5% des Wegs zwischen beiden Endanschlägen (45) beträgt.

4. Verfahren zum Initialisieren einer gemäss einem der Ansprüche 1, 2 oder 3 eingestellten Kalibrieranordnung einer Waage, **dadurch gekennzeichnet, dass** beim Aufstarten der Waage das Kalibriergewicht (41) zunächst gemäss der als Weg zwischen Ruheposition (58) und Kalibrierposition (57) abgespeicherten Anzahl von Distanzschritten in die Kalibrierposition (57) gefahren wird, und danach das Kalibriergewicht (41) gemäss der als Weg zwischen Ruheposition (58) und Kalibrierposition (57) abgespeicherten Anzahl von Distanzschritten in die Ruheposition (58) bewegt wird, und dabei der Weg des Kalibriergewichts (41) stets mittels des Zählsystems (56) gemessen wird.

5. Verfahren nach Anspruch 4, **dadurch gekennzeichnet, dass** wenn beim Aufstarten der Waage das Kalibriergewicht (41) zunächst gemäss der als Weg zwischen Ruheposition (58) und Kalibrierposition (57) abgespeicherten Anzahl von Distanzschritten in die Kalibrierposition (57) gefahren wird und wenn beim Erreichen des Endanschlags die abgespeicherte Anzahl von Distanzschritten zwischen Kalibrierposition und Ruheposition noch nicht abgefahren worden ist, das Kalibriergewicht (41) gemäss der als Weg zwischen erstem Endanschlag und Ruheposition (58) (57) abgespeicherten Anzahl von Distanzschritten in die Ruheposition (58) bewegt wird, und dabei der Weg des Kalibriergewichts (41) stets mittels des Zählsystems (56) gemessen wird.

6. Verfahren zum Kalibrieren einer gemäss einem der Ansprüche 1 bis 3 eingestellten Waage, welche nach einem der Ansprüche 4 bis 5 aufgestartet wurde, **dadurch gekennzeichnet, dass** das Kalibriergewicht (41) gemäss der als Weg zwischen Ruheposition (58) und Kalibrierposition (57) abgespeicherten Anzahl von Distanzschritten, zwischen der Ruheposition (58) und der Kalibrierposition (57) bewegt wird, und dabei der Weg des Kalibriergewichts (41) stets mittels des Zählsystems (56) gemessen wird.

7. Verfahren nach einem der Ansprüche 1 bis 6, zum Kalibrieren oder Einstellen einer Waage **dadurch gekennzeichnet, dass** der Bewegung des Kalibriergewichts (41) ein bestimmtes Geschwindigkeitsprofil aufgeprägt wird.

8. Vorrichtung zur Durchführung der Verfahren nach einem der Ansprüche 1 bis 7.

9. Vorrichtung nach Anspruch 8 wobei das Zählsystem (56) eine Scheibe mit entlang eines auf ihrer Achse zentrierten Umfangs gleichmässig verteilten durchgehenden Löchern, und eine Lichtschranke (54) aufweist.

10. Vorrichtung nach Anspruch 8 wobei das Zählsystem (56) ein Rad mit Einbuchtungen an seiner Kante und eine Lichtschranke aufweist.

11. Vorrichtung nach Anspruch 8 wobei das Zählsystem (56) eine Stange mit auf einer Linie gleichmässig verteilten durchgehenden Löchern, und eine Lichtschranke aufweist.

12. Vorrichtung nach einem der Ansprüche 8 bis 11 wobei die Scheibe oder die Stange runde oder längliche durchgehenden Löchern aufweist.

13. Vorrichtung nach einem der Ansprüche 8 bis 12 wobei das Zählsystem (56) eine Übersetzung aufweist.

14. Vorrichtung nach Anspruch 8 wobei das Zählsystem (56) eine Scheibe mit entlang eines auf ihre Achse zentrierten Umfangs gleichmässig verteilten mit reflektierendem Material ausgekleideten Vertiefungen, und einen Sensor für reflektieres Licht aufweist.

## Claims

1. Method to adjust a calibration arrangement (40) of an electronic balance which comprises a calibration arrangement (40) and a force-measuring device (1) during the production process, said calibration arrangement (40) comprising a transfer mechanism (44) with a drive system (43), wherein the calibration arrangement (40) couples at least one calibration weight (41) to the force-measuring device (1), said coupling being effected by the transfer mechanism (44) transferring the calibration weight (41) in a guided movement between a rest position (58) and a calibration position (57), wherein the method comprises the following steps:
• once during assembly, moving the calibration weight (41) into a first end stop (45);
• then moving the calibration weight (41) once into a second end stop (45);
• measuring the travel distance between the two end stops (45) by means of a counter system 56, wherein the travel steps of said travel distance are registered incrementally, and at least temporarily storing the results as the number of travel steps between the two end stops (45);
• subtracting from the measured number of travel steps a first number of travel steps representing a defined distance from the first end stop (45), and storing the difference as the travel distance between rest position (58) and first end stop (45);
• subtracting from the calculated number of travel steps which represents the travel distance between rest position (58) and first end stop (45) a second number of travel steps representing a defined distance from the second end stop (45), and storing the difference as the travel distance between rest position (58) and calibration position (57).

2. Method according to claim 1, **characterized in that** the result of subtracting from the measured number of travel steps the first number of travel steps representing a defined distance from the first end stop (45) defines the rest position (58), and the result of subtracting from the calculated number of travel steps the second number of travel steps representing a defined distance from the second end stop (45) defines the calibration position (57).

3. Method according to claim 1, **characterized in that** the distance from the first end stop (45) and the distance from the second end stop (45) each comprise at least two travel steps and that their sum amounts to no more than 5% of the travel distance between the two end stops (45).

4. Method of initializing a calibration arrangement of a balance which has been adjusted according to one of the claims 1, 2 or 3, **characterized in that** during the start-up of the balance the calibration weight (41) is first moved into the calibration position (57) in accordance with the number of travel steps which has been stored as the travel distance between rest position (58) and calibration position (57), and that the calibration weight (41) is next moved into the rest position (58) in accordance with the number of travel steps which has been stored as the travel distance between rest position (58) and calibration position (57), and that the travel distance covered by the calibration weight (41) in the course of the movement is constantly measured by means of the counter system (56).

5. Method according to claim 4 **characterized in that**, if during the start-up of the balance the calibration weight (41) is first moved into the calibration position (57) in accordance with the number of travel steps which has been stored as the travel distance between rest position (58) and calibration position (57), and if upon arrival at the end stop the stored number of travel steps between calibration position and rest position has not yet been met, the calibration weight (41) is moved into the rest position (58) in accordance with the number of travel steps which has been stored as the travel distance between the first end stop and the rest position (58), and that the travel distance covered by the calibration weight (41) in the course of the movement is constantly measured by means of the counter system (56).

6. Method of calibrating a balance which has been adjusted according to one of the claims 1 to 3 and which was started up according to one of the claims 4 or 5, **characterized in that** the calibration weight (41) is moved between the rest position (58) and the calibration position (57) in accordance with the number of travel steps that has been stored as the travel distance between rest position (58) and calibration position (57) , and that the travel distance covered by the calibration weight (41) in the course of the movement is constantly measured by means of the counter system (56).

7. Method according to one of the claims 1 to 6 for calibrating or adjusting a balance, **characterized in that** a specific velocity profile is imposed on the movement of the calibration weight (41).

8. Apparatus for carrying out the methods according to one of the claims 1 to 7.

9. Apparatus according to claim 8, wherein the counter system (56) comprises a disk that is perforated with holes lying at regular intervals along a circle that is centered on the axis of the disk, and further comprises a light gate (54).

10. Apparatus according to claim 8, wherein the counter system (56) comprises a disk that is perforated with holes lying at regular intervals along a circle that is centered on the axis of the disk, and further comprises a light gate (54).

11. Apparatus according to claim 8, wherein the counter system (56) comprises a bar that is perforated with holes which are uniformly distributed along a line and further comprises a light gate.

12. Apparatus according to one of the claims 8 to 11, wherein the disk or the bar comprises round or elongated passage holes.

13. Apparatus according to one of the claims 8 to 12, wherein the counter system (56) comprises a ratio-multiplier device.

14. Apparatus according to claim 8, wherein the counter system (56) comprises a disk with indentations which lie at regular intervals along a circle that is centered on the axis of the disk and which are coated with a reflective material, and further comprises a sensor for reflected light.

## Revendications

1. Procédé pour le réglage d'un ensemble d'étalonnage (40) d'une balance électronique comportant un ensemble d'étalonnage (40) et un dispositif de mesure de force (1) pendant la production, ledit ensemble d'étalonnage (40) comprenant un mécanisme de transfert (44) doté d'un système d'entraînement (43), dans lequel l'ensemble d'étalonnage (40) associe au moins un poids d'étalonnage (41) au dispositif de mesure de force (1), à l'aide du mécanisme de transfert (44) déplaçant de façon guidée le poids d'étalonnage (41) entre une position de repos (58) et une position d'étalonnage (57), comprenant les étapes suivantes :
• déplacement du poids d'étalonnage (41), une fois pendant le montage, jusqu'à une première butée finale (45) ;
• déplacement consécutif du poids d'étalonnage (41), une fois, jusqu'à une deuxième butée finale (45) ;
• mesure du chemin entre les deux butées finales (45) au moyen d'un système de comptage (56), les incréments de distance du chemin étant détectés de façon incrémentielle, et enregistrement au moins temporaire du résultat en tant que nombre d'incréments de distance entre les deux butées finales (45) ;
• déduction d'un premier nombre d'incréments de distance correspondant à un écart défini par rapport à la deuxième butée finale (45), à partir du nombre mesuré d'incréments de distance, et enregistrement de la différence en tant que chemin entre la position de repos (58) et la première butée finale (45) ;
• déduction d'un deuxième nombre d'incréments de distance correspondant à un écart défini par rapport à la deuxième butée finale (45), à partir du nombre calculé d'incréments de distance correspondant au chemin entre la position de repos (58) et la première butée finale (45), et enregistrement de la différence comme chemin entre la position de repos (58) et la position d'étalonnage (57).

2. Procédé selon la revendication 1, **caractérisé en ce que** la déduction du premier nombre d'incréments de distance correspondant à l'écart défini par rapport à la première butée finale (45), à partir du nombre mesuré d'incréments de distance, permet de définir la position de repos (58), et la déduction du deuxième nombre d'incréments de distance correspondant à un écart défini par rapport à la deuxième butée finale (45), à partir du nombre calculé d'incréments de distance, permet de définir la position d'étalonnage (57).

3. Procédé selon la revendication 1, **caractérisé en ce que** l'écart par rapport à la première butée finale (45) et l'écart par rapport à la deuxième butée finale (45) comprennent respectivement au moins un incréments de distance, et leur somme représente au maximum 5% du chemin entre les deux butées finales (45).

4. Procédé pour l'initialisation d'un ensemble d'étalonnage pour balance, réglé selon l'une des revendications 1, 2 ou 3, **caractérisé en ce que** lors de la mise en marche de la balance, le poids d'étalonnage (41) est déplacé tout d'abord vers la position d'étalonnage (57) en fonction du nombre d'incréments de distance enregistré en tant que chemin entre la position de repos (58) et la position d'étalonnage (57), puis le poids d'étalonnage (41) est déplacé vers la position de repos (58) en fonction du nombre d'incréments de distance enregistré en tant que chemin entre la position de repos (58) et la position d'étalonnage (57), le chemin du poids d'étalonnage (41) étant toujours mesuré au moyen du système de comptage (56).

5. Procédé selon la revendication 4, **caractérisé en ce que** lorsqu'au moment de la mise en marche de la balance, le poids d'étalonnage (41) est déplacé tout d'abord vers la position d'étalonnage (57) en fonction du nombre d'incréments de distance enregistré en tant que chemin entre la position de repos (58) et la position d'étalonnage (57), et lorsqu'au moment de l'atteinte de la butée finale, le nombre enregistré d'incréments de distance entre la position d'étalonnage et la position de repos n'a pas encore été parcouru, le poids d'étalonnage (41) est déplacé vers la position de repos (58) en fonction du nombre d'incréments de distance enregistré en tant que chemin entre la première butée finale et la position de repos (58) (57), le chemin du poids d'étalonnage (41) étant toujours mesuré au moyen du système de comptage (56).

6. Procédé pour l'étalonnage d'une balance réglée selon l'une des revendications 1 à 3, laquelle a été mise en marche selon l'une des revendications 4 à 5, **caractérisé en ce que** le poids d'étalonnage (41) est déplacé entre la position de repos (58) et la position d'étalonnage (57), en fonction du nombre d'incréments de distance enregistré en tant que chemin entre la position de repos (58) et la position d'étalonnage (57), le chemin du poids d'étalonnage (41) étant toujours calculé au moyen du système de comptage (56).

7. Procédé selon l'une des revendications 1 à 6, pour l'étalonnage ou le réglage d'une balance, **caractérisé en ce que** le déplacement du poids d'étalonnage (41) est soumis à un certain profil de vitesse.

8. Dispositif pour l'exécution du procédé selon l'une des revendications 1 à 7.

9. Dispositif selon la revendication 8, dans lequel le système de comptage (56) comporte un disque avec des trous traversants répartis de façon régulière le long d'un pourtour centré sur son axe, ainsi qu'une barrière de lumière (54).

10. Dispositif selon la revendication 8, dans lequel le système de comptage (56) comporte une roue avec des échancrures sur le bord et une barrière de lumière.

11. Dispositif selon la revendication 8, dans lequel le système de comptage (56) comporte une barre avec des trous traversants répartis de façon régulière sur une ligne, ainsi qu'une barrière de lumière.

12. Dispositif selon l'une des revendications 8 à 11, dans lequel le disque ou la barre comporte des trous traversants ronds ou oblongs.

13. Dispositif selon l'une des revendications 8 à 12, dans lequel le système de comptage (56) comporte une démultiplication.

14. Dispositif selon la revendication 8, dans lequel le système de comptage (56) comporte un disque avec des renfoncements revêtus d'un matériau réfléchissant, répartis de façon régulière le long d'un pourtour centré sur son axe, ainsi qu'un capteur pour la lumière réfléchie.
